# EUROPÄISCHE PATENTANMELDUNG

(11) **EP 2 309 422 A1**
(43) Veröffentlichungstag der Anmeldung: **13.04.2011**
(21) Anmeldenummer: 09172433.6
(22) Anmeldetag: 07.10.2009
(51) Int. Cl.: G06K 9/00

(54) **Fingerabdruckaufnahmegerät und Verfahren zur automatischen Aufnahme eines Fingerabdruckbildes**

(71) Anmelder: DERMALOG Identification Systems GmbH, 20148 Hamburg (DE)
(72) Erfinder: Kulcke, Axel, 8382 Weiselbaum (AT); Mull, Günther, 22085 Hamburg (DE); Püschel, Klaus, 22457 Hamburg (DE); Hengfoss, Clarissa, 22305 Hamburg (DE)
(74) Vertreter: UEXKÜLL & STOLBERG

(57) **Zusammenfassung**

Die vorliegende Erfindung betrifft ein Fingerabdruckaufnahmegerät zur automatischen Aufnahme eines Fingerabdruckbildes mit einer Datenverarbeitungseinheit, einem transparenten Auflagekörper (2) mit einer ebenen Auflagefläche zur Auflage eines Fingers, einer Lichtquelle (3) zur Beleuchtung des auf der Auflagefläche aufliegenden Fingers, einem mit der Datenverarbeitungseinheit verbundenen ersten Kamerasensor (14) zur Aufnahme des auf der Auflagefläche aufliegenden Fingers, **dadurch gekennzeichnet, dass** eine zweite Lichtquelle (3') zur Einstrahlung von Licht einschließlich des Wellenlängenbereichs von 800 bis 1000 nm in den Finger und ein Spektrometer vorgesehen sind, das eine schlitzförmige Blende (11) zur Ausblendung eines schlitzförmigen Bereichs des aus dem auf der Auflagefläche aufliegenden Finger wieder austretenden Lichts der zweiten Lichtquelle (3'), ein Gitter (24), das so aufgebaut und angeordnet ist, dass die dispersive Auffächerung des durch die Blende hindurchtretenden Lichts in einer von der Längsrichtung der Blende verschiedenen Richtung erfolgt, und einen zweiten Kamerasensor (28) aufweist, der so aufgebaut und angeordnet ist, dass er das Beugungsbild mit der Längsrichtung der Blende in einer ersten Richtung und der dispersiven spektralen Auffächerung des Lichtes in einer von der ersten verschiedenen zweiten Richtung aufnimmt, wobei die Datenverarbeitungseinheit dazu vorbereitet ist, die von dem zweiten Kamerasensor (28) empfangenen Signale als eine Vielzahl von Spektren entsprechend einer Vielzahl von Bildelementen entlang der Längsrichtung der Blende aufzunehmen und die Vielzahl von Spektren zu einem mittleren Spektrum zusammenzufassen, wobei die Datenverarbeitungseinheit weiter dazu vorbereitet ist, das zusammengefasste Spektrum einer multivariaten statistischen Analyse zu unterziehen, um den Anteil von Ethanol aus dem erfassten gemittelten Spektrum zu bestimmen.

## Beschreibung

Die vorliegende Erfindung betrifft ein Fingerabdruckaufnahmegerät zur automatischen Aufnahme eines Fingerabdruckbildes mit einer Datenverarbeitungseinheit, einem transparenten Auflagekörper mit einer ebenen Auflagefläche zur Auflage eines Fingers, einer Lichtquelle zur Einstrahlung von Licht in den Auflagekörper und zur Beleuchtung des auf der Auflagefläche aufliegenden Fingers, einem mit der Datenverarbeitungseinheit verbundenen ersten Kamerasensor zur Aufnahme des auf der Auflagefläche aufliegenden Fingers als Fingerabdruckbild.

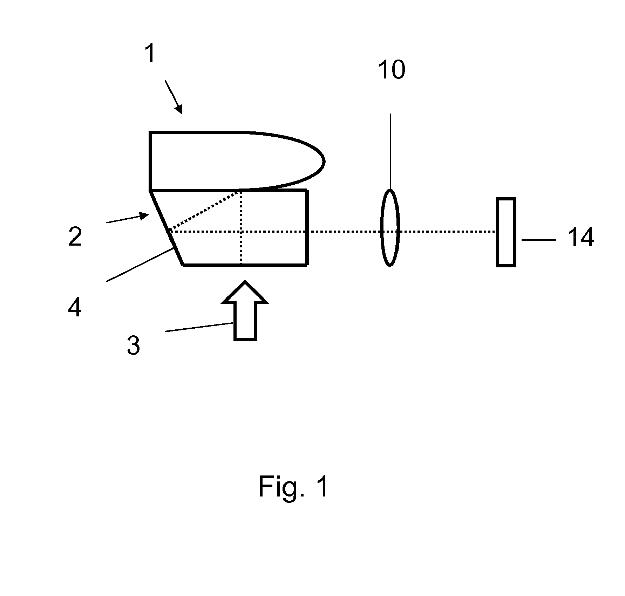

Eine derartige Vorrichtung ist zum Beispiel aus U.S. 2005/0205667 A1 bekannt. Fingerabdruckaufnahmegeräte weisen typischerweise einen durchsichtigen Prismenkörper oder Auflagekörper auf, auf dessen obere Oberfläche ein Finger zur Aufnahme aufzulegen ist. Der Prismenkörper ist typischerweise ein Glaskörper. Eine erste Lichtquelle ist so angeordnet, um den auf den Prismenkörper aufgelegten Finger durch den Prismenkörper hindurch zu beleuchten. Ein ortsempfindlicher Sensor, also ein Kamerasensor, ist so angeordnet, um von dem aufgelegten Finger reflektiertes Licht, das durch den Prismenkörper hindurch zurückgeworfen wird, aufzunehmen. Solche Fingerabdruckaufnahmegeräte machen sich den Unterschied der Brechungsindizes einerseits zwischen dem Prismenkörper und darauf aufliegenden Hautbereichen und andererseits zwischen Prismenkörper und Luft, in den zwischen benachbarten Hautleisten liegenden Zwischenräumen, zunutze. Das auf die Auflagefläche des Prismenkörpers 2, wie schematisch in Fig. 1 dargestellt, auftreffende Licht wird durch diffuse Streuung in einigen Bereichen, nämlich in den Bereichen, wo Hautleisten aufliegen, gestreut und fällt auf eine abgeschrägte, verspiegelte Seite 4 des Prismenkörpers. Dort, wo keine Hautleiste aufliegt, verlassen die Lichtstrahlen das Prisma. Dadurch erscheinen im Fingerabdruckbild die Zwischenräume der Hautleisten als schwarz und die Hautleisten als weiß.

Es gibt eine Reihe von Verfahren, mit dem die so aufgenommenen Fingerabdruckbilder dann ausgewertet und mit vorhandenen bekannten Datensätzen zur Identifizierung verglichen werden können, siehe zum Beispiel EP 1 498 837 A1.

Die oben beschriebene Technik wird heute vorwiegend mit optischen Ein- oder Vierfinger-Scannern umgesetzt. Für eine hohe Bildqualität (hohe Auflösung, starker Kontrast und Verzerrungsfreiheit) haben sich digitale Kamerasysteme durchgesetzt. Als Auflagefläche dient wie oben beschrieben ein spezielles Prisma. Aufgrund des Prinzips der internen Totalreflexion (FTIR oder "frustrated total internal reflection") wird nur dort ein helles Bild erzeugt, wo Hautleisten durch Auflage auf dem Prisma eine Brechungsindexanpassung bewirken, wie oben beschrieben. Solche Fingerabdruckaufnahmegeräte werden zur biometrischen Identifizierung von Personen zum Beispiel bei der Zugangskontrolle zu Gebäuden oder Räumen oder bei anderweitigen Überprüfung einer Berechtigung einer Person eingesetzt.

Heute muss in der Wirtschaft und im öffentlichen Bereich neben der Überprüfung der Berechtigung einer bestimmten Person auch oft sichergestellt werden, dass die erkannte Person keinen über einem Schwellenwert liegenden Blutalkoholgehalt hat, da zum Beispiel gewährleistet werden muss, dass die berechtigten Personen nur im nüchternen Zustand bestimmte Räume/Labore betreten oder bestimmte Aufgaben wie eine Maschinenführung oder Gefahrguttransporte erledigen dürfen. Das ist zwar häufig in Gesetzen oder Regelungen vorgeschrieben, aber eine ständige Überprüfung ist bisher nicht möglich. Das liegt vor allem daran, dass die Prüfung des Blutalkoholgehaltes nur über eine invasive Blutalkoholkontrolle rechtlich abgesichert ist oder eine Atemalkoholkontrolle durchgeführt werden muss. Die Atemalkoholkontrolle ist zum einen ungenau und fehleranfällig, hat erhebliche technische Restriktionen und lässt zum anderen keine eindeutige Identifikation einer Person zu. Die technischen Restriktionen sind bei einem breit angelegten Feldversuch deutlich hervorgetreten.

Die meisten Atemalkoholmessgeräte zeigen den Alkoholgehalt in der ausgeatmeten Luft an. Der Alkoholgehalt wird hierbei im Allgemeinen mit einem elektrochemischen Verfahren bestimmt. Dabei wird eine festgelegte Luftmenge analysiert, wobei Elektrolyt und das Elektrodenmaterial so gewählt sind, dass der zu analysierende Alkohol an der Katalysatorschicht der Messelektrode elektrochemisch oxidiert wird. Die bei der Reaktion an der Elektrode frei werdenden Elektronen führen zu einem Strom über die Anschlussdrähte, der in der Geräteelektronik dann quantitativ erfasst werden kann. Der Atemalkoholgehalt entspricht aber nicht dem Blutalkoholgehalt. Daher wird ein fester Korrelationsfaktor für die Umrechnung benötigt. In den U.S.A. und in vielen europäischen Ländern wird für den sogenannten "Blood-breath partition coefficient" ein Wert von 2.100 angesetzt. In Europa variiert der Wert zwischen 1.900 und 2.400. Problematisch ist hierbei allerdings, dass dieser Faktor zwischen verschiedenen Personen stark variiert, da er von der Physiologie (Gewicht, Größe, etc.) der Person abhängt. Weiterhin muss gewährleistet werden, dass die analysierte Luft aus den tieferen Lungenbereichen aufgenommen wird, da hier Unterschiede über einen Atemzyklus bestehen.

Wichtig für einen weitverbreiteten Einsatz einer nicht invasiven Kontrolle wäre, dass eine gleichzeitige Identifikation der Person möglich ist, wobei gerade eine gleichzeitige und verlässliche Identifikation der Person von Bedeutung ist. Gerade in der Arbeitswelt werden häufig aus unterschiedlichen Gründen Hindernisse überwunden, indem zwischen Arbeitskollegen oder auch von Vorgesetzten die Sicherungsmittel ausgetauscht werden (zum Beispiel Übergeben von Schlüsseln, Übergeben von Identifikationskarten oder Nummerncodes oder Passwörtern). Daher wäre es sehr wichtig, neben einer genauen biometrischen Identifikation eine simultane Erfassung des Blutalkoholgehalts der Person zu ermöglichen.

Zur Personenidentifikation hat sich im Bereich der Biometrie die Technik der Aufnahme und Auswertung von Fingerabdruckbildern bewährt, nämlich die Aufnahme und Auswertung der Minutien der Papillarleisten von Fingerabdrücken. Die dafür benötigten Datenbanksysteme werden im Allgemeinen als AFIS-Systeme (Automatic Fingerprint Identification Systems) bezeichnet. Die Auswerteverfahren für die Fingerabdrücke über die Minutien sind gut bekannt und werden auch in sehr großen Datenbanksystemen (mehr als 10 Mio. gespeicherte Fingerabdrücke) angewendet. Die Auswertung läuft auch bei großen Datenmengen schnell und zuverlässig.

In einigen technischen Anwendungsgebieten außerhalb der Medizintechnik und der Bestimmung des Blutalkoholgehalts gibt es Verfahren zur Bestimmung von Alkoholgehalten in flüssigen Proben. Beispielsweise wird bei der Produktion von alkoholischen Getränken regelmäßig eine Kontrolle des Alkoholgehalts durch spektroskopische Methoden oder durch daraus abgeleiteten Verfahren mit optischen Bandpassfiltern oder multispektralen Analysen durchgeführt. Der üblicherweise eingesetzte Spektralbereich ist hier 1000 nm bis 1700 nm, da hier eine Eindring-oder Durchdringtiefe von mehreren Millimetern gewährleistet ist, so dass technisch eine vernünftige Umsetzung möglich ist. Beispiele für solche spektroskopischen Messverfahren an flüssigen Proben sind in EP 1 073 896 B1 und EP 1 965 193 A1 beschrieben.

Aufgrund gesetzlicher Bestimmungen, muss der Alkoholgehalt für den Kunden genau angegeben werden. Bei diesen Messungen werden in der Analyse im Allgemeinen die Signalintensitäten der charakteristischen Absorptionsbanden des Ethanols bestimmt. Diese Absorptionsbanden werden durch Rotations-Schwingungsanregungen der für den Alkohol charakteristischen Molekülgruppe OH erzeugt und sind daher eindeutig im Spektrum identifizierbar. Vorwiegend werden für derartige Anwendungen Transmissionsmessungen durchgeführt, wobei in einigen Fällen auch reflexive oder transflexive Verfahren zum Einsatz kommen (transflexive Verfahren sind eine Kombination von transmissiven und reflexiven Messverfahren, die bei Stoffen eingesetzt werden, welche einen hohen Transmissionsgrad, aber auch diffus streuende Eigenschaften in dem Probenvolumen haben. Bei dieser Methode ist die genaue Weglänge von den diffus streuenden Eigenschaften des Materials abhängig.

Bei der nicht invasiven Bestimmung von Blutalkoholgehalten gibt es zwei grundlegende Messverfahren, nämlich das elektrochemische und das optische. Bei der elektrochemischen Methode ist zu berücksichtigen, dass man bei dieser Methode nicht in das Gewebe eindringen kann, sondern über eine Membran einen Gleichgewichtszustand mit der Gewebeoberfläche (Haut) herstellen muss.

In U.S. 2005/261560 A1 werden ein Verfahren und ein Gerät beschrieben, die mit Hilfe eines FTIR-Spektrometers und einer thermischen Beleuchtung in einem Transflexionsverfahren eine Blutalkoholbestimmung am Menschen ermöglichen. Bei dem in U.S. 2005/261 560 A1 beschriebenen Verfahren wird die Blutalkoholbestimmung am Unterarm der zu testenden Person durchgeführt. Die beschriebene Verfahrensweise setzt voraus, dass an einer Körperstelle mit relativ großer Hautoberfläche gemessen werden muss. Der verwendete Spektralbereich liegt zwischen 1.500 nm und 2.500 nm. Das aufgenommene Licht wird dann über eine Lichtleitfaser zu einem größeren Spektrometersystem geführt, das als Fourier-Transformations-Spektrometer ausgelegt ist. Dabei ist die FTIR-Spektroskopie (Fourier-transform infrared) ein sehr genaues Verfahren, benötigt aber lange Messzeiten. Wie erwähnt, wird aber für das beschriebene Verfahren eine große Aufnahmefläche (optisch untersuchte Hautoberfläche) benötigt, so dass bei der Aufnahme nur eines Fingerabdrucks auf diese Weise keine Blutalkoholbestimmung möglich wäre. Ferner ist in dem Spektralbereich 1500 nm bis 2500 nm die Absorbance von lebendem Gewebe im Bereich von Faktor 2-3 größer als beispielsweise im Spektralbereich 800nm bis 1000nm. Diese führt zu wesentlich niedrigeren Eindringtiefen oder Durchdringtiefen, das heißt relativ mehr Signal wird in den ersten 1-2 mm an der Hautoberfläche generiert. Das ist nachteilig, da gerade in den schlechter durchbluteten Hautoberflächenschichten niedrigere Alkoholkonzentrationen im Gewebe sein können. Im Übrigen wäre selbst bei gleichzeitiger Aufnahme des Fingerabdrukkes und der Messung des Blutalkoholgehaltes im Unterarmbereich eine räumliche Trennung der Messbereiche notwendig , so dass keine andere Person den Finger für die Fingerabdruckaufnahme auflegen kann. Daher wäre es prinzipiell wichtig, gleichzeitig und an der gleichen Körperstelle die Bestimmung des Blutalkohols und der biometrischen Identifikation über den Fingerabdruck zu ermöglichen.

Es ist Aufgabe der vorliegenden Erfindung, ein Gerät und ein Verfahren zur automatischen Aufnahme eines Fingerabdruckbildes zum Zweck der Personenidentifikation und zur gleichzeitigen Bestimmung des Blutalkoholgehaltes der Person anzugeben.

Zur Lösung dieser Aufgabe dient das Gerät mit den Merkmalen des Patentanspruchs 1 und das Verfahren mit den Merkmalen des Patentanspruchs 7. Vorteilhafte Ausführungsformen der Erfindung sind in den Unteransprüchen aufgeführt.

Das erfindungsgemäße Fingerabdruckaufnahmegerät ist mit einer zweiten Lichtquelle zur Einstrahlung von Licht einschließlich des Wellenlängenbereichs von 800 bis 1.000 nm in den auf dem Auflagekörper aufliegenden Finger und mit einem Spektrometer versehen. Das Spektrometer ist als zweidimensionales Spektrometer in folgender Weise aufgebaut: Es hat eine schlitz- oder spaltförmige Blende zur Ausblendung eines schlitzförmigen Bereichs des aus dem auf der Auflagefläche aufliegenden Finger wieder ausgetretenen Lichts der zweiten Lichtquelle. Für das Spektrometer ist es wichtig, dass nicht direkt reflektiertes Licht gemessen wird, sondern nur Licht, das bereits das Gewebe des Fingers durchlaufen hat. Daher muss die zweite Lichtquelle so gestaltet und angeordnet sein, dass ihr Licht an einer Stelle in den Finger eingekoppelt wird und das an einer anderen Stelle wieder austretende Licht gemessen wird. Ferner ist in dem Spektrometer ein Gitter vorgesehen, das so aufgebaut und angeordnet ist, dass die durch die Beugung am Gitter bewirkte dispersive Auffächerung des durch die Blende hindurchtretenden Lichts in einer von der Längsrichtung der Blende verschiedenen, vorzugsweise senkrecht dazu liegenden, Richtung erfolgt. Von dem Gitter gebeugtes Licht wird auf einen zweiten Kamerasensor geworfen, der so aufgebaut und angeordnet ist, dass er ein Beugungsbild des Gitters mit der Längsrichtung der Blende in einer ersten Richtung und der dispersiven spektralen Auffächerung des Licht in einer von der ersten verschiedenen zweiten Richtung auf seiner Kamerasensorfläche aufnimmt. Der zweite Kamerasensor ist mit der Datenverarbeitungseinheit verbunden, die weiter dazu vorbereitet ist, die von dem zweiten Kamerasensor empfangenen Signale als eine Vielzahl von Spektren entsprechend einer Vielzahl von Bildelementen entlang der Längsrichtung der Blende aufzunehmen und die Vielzahl von Spektren zu einem mittleren Spektrum zusammenzufassen. D.h. das Beugungsbild der Blende liegt zum Beispiel so auf dem Kamerasensor, dass die Längsausdehnung der Blende der Y-Richtung entspricht und die dispersive Auffächerung in X-Richtung senkrecht dazu erfolgt. Dann entspricht jede Zeile des Kamerasensors einem Bildelement des durch die Blende hindurchtretende Lichtes, dessen Spektrum in X-Richtung entlang einer Zeile des Kamerasensors verläuft. Jede Zeile bildet dann ein unabhängig gemessenes Spektrum von aus dem Finger wieder ausgetretenem Licht der zweiten Lichtquelle. Durch Zusammenfassen der Vielzahl von Spektren wird eine hohe statistische Messgenauigkeit des zusammengefassten Spektrums erreicht. Die Datenverarbeitungseinheit ist weiter dazu vorbereitet, das zusammengefasste gemittelte Spektrum einer multivariaten statistischen Analyse zu unterziehen, um den Anteil von Ethanol aus dem erfassten gemittelten Spektrum zu bestimmen. Es sind eine Reihe von multivariaten statistischen Analyseverfahren bekannt, um Messdaten zu analysieren, zum Beispiel Korrelation, Regression, Varianzanalyse, Diskriminanz-Analyse und Hauptkomponenten- und Faktoranalyse. Im vorliegenden Fall ist es zum Beispiel bevorzugt, dass die Spektren von reinem Ethanol, Wasser und Körperfett gespeichert sind und dass das gemittelte zusammengefasste Spektrum unter Verwendung dieser bekannten Spektren einer Hauptkomponentenanalyse unterzogen wird, um den relativen Anteil von Ethanol zu bestimmen.

Das erfindungsgemäße Fingerabdruckaufnahmegerät weist also neben der üblichen Lichtquelle und dem Kamerasensor zur Aufnahme des Fingerabdruckbildes eine zweite Lichtquelle und einen zweiten Kamerasensor auf, die Teil eines Spektrometers sind, um durch den Finger in Transmission oder Transflexion übertragenes Licht mit einem als "spectral imaging" (2D-Spektroskopie) bezeichneten Verfahren zu analysieren.

Unter dem Begriff Blende sollen hier alle optischen Mittel verstanden werden, die einen langgestreckten, streifenförmigen Bereich von aus dem auf der Auflageflächen aufliegenden Finger austretendem Licht ausblenden, wobei der streifenförmige Bereich nicht notwendig in Längsrichtung durchgängig sein muss, sondern auch aus einer reihenförmigen Folge von einzelnen separaten Bildelementen zusammengesetzt sein kann.

Die Spektrometereinheit kann beispielsweise drei Objektive aufweisen. Das erste erzeugt eine normale zweidimensionale Abbildung des aus dem auf der Auflagefläche aufliegenden Finger austretenden Lichts. In der Bildebene des ersten Objektivs ist die spaltförmige Blende angeordnet. Die spaltförmige Blende nimmt einen z.B. 30µm breiten Streifen aus dem Bild. Das zweite Objektiv bildet die spaltförmige Blende ins Unendliche ab. Hinter dem zweiten Objektiv liegt das Gitter, das eine dispersive Aufspaltung des Lichts in Richtung senkrecht zur Längsausdehnung der spaltförmigen Blende bewirkt. Das letzte Objektiv macht wieder die Abbildung vom Unendlichen auf das reale Bild, welches nun aber durch das zwischenliegende Gitter spektral aufgefächert ist.

In einer bevorzugten Ausführungsform ist das Gitter des Spektrometers ein Blaze-Gitter, das dazu optimiert ist, das dispergierte Licht für einen gegebenen Wellenlängenbereich in einen vorgegebenen Winkelbereich konzentriert abzugeben. Klassische Gitter haben den Nachteil, dass das Licht einer bestimmten Wellenlänge hauptsächlich in die nullte Ordnung und der Rest über höhere Ordnungen verteilt wird, was einen Verlust an Helligkeit und damit Empfindlichkeit in jeder einzelnen Ordnung mit sich bringt. Dieser Nachteil wird durch die sogenannten Blaze-Gitter überwunden. Blaze-Gitter sind dazu optimiert, das Licht nur in eine bestimmte Richtung und somit bei gegebener Wellenlänge hauptsächlich in eine bestimmte Ordnung zu beugen. Dadurch kann ein Kamerasensor in dem optimierten Winkelbereich positioniert werden und braucht dort nur einen relativ kleinen Raumwinkelbereich zu überdecken. Zu den ersten Blaze-Gittern gehörten zum Beispiel Reflexionsgitter mit asymmetrisch sägezahnförmigen Oberflächengestaltungen, wobei die Sägezahnflanken als einzelne Spiegel jeweils so ausgerichtet sind, dass das Licht in Richtung der gewünschten Beugungsordnung reflektiert wird. Danach wurden auch holographische Gitter entwickelt, die den gleichen Effekt wie die zuerst beschriebene Blaze-Gitter haben. Weitere Typen von Blaze-Gittern sind die später entwickelten sogenannten VPH-Gitter (Volume phase holographic gratings). VPH-Gitter sind Transmissionsgitter, bei denen ein transparentes Material zwischen zwei Glas-oder Kunststoffscheiben eingeschlossen ist. In dem transparenten Material ist ein gewünschtes Muster eines variierenden Brechungsindex erzeugt, zum Beispiel durch holographische Belichtung und dadurch erfolgende Strukturänderung des Materials. Ein Beispiel für ein solches Blaze-Gitter ist in dem Artikel "Volume-phase holographic gratings and the efficiency of three simple volume-phase holographic gratings", Samuel C. Barden et al., Publications of the Astronomical Society of the Pacific, Vol. 112, Seiten 809 - 820, Juni 2000, beschrieben. Mit solchen Blaze-Gittern lässt sich ein hoher Prozentsatz des gebeugten Lichts für den interessierenden Wellenlängenbereich in einen bestimmten Winkelbereich konzentrieren. Damit kann mit einem relativ kleinen Kamerasensor ein großer Anteil des Beugungsspektrums erfasst werden. Mit typischen Blaze-Gittern lassen sich ohne weiteres hohe Anteile von über 60% der Beugungsintensität in einem kleinen vorgegebenen Winkelbereich konzentrieren.

Vorzugsweise hat die Datenverarbeitungseinheit Zugriff auf gespeicherte Spektren von reinem Ethanol, Wasser und Körperfett und ist die Datenverarbeitungseinheit weiter dazu vorbereitet, das zusammengefasste Spektrum nach seinen Anteilen der gespeicherten Einzelspektren zu analysieren und daraus den relativen Anteil von Ethanol zu bestimmen.

Vorzugsweise hat die Datenverarbeitungseinheit Zugriff auf eine Mehrzahl von gespeicherten Fingerabdruckbildern oder von Daten, die für eine Mehrzahl von Fingerabdruckbildern jeweils für deren charakteristischen Minutienpositionen repräsentativ sind, und enthält ein Abgleichprogramm, um ein aktuell aufgenommenes Fingerabdruckbild mit gespeicherten Daten zu vergleichen und bei einem vorgegebenen Übereinstimmungsmaß eine Identifizierung der Person anzugeben.

Die erste Lichtquelle für die Fingerabdruckaufnahme sollte für eine flächige homogene Beleuchtung sorgen und vorzugsweise auch schnell schaltbar sein. Der Spektralbereich sollte typisch im Bereich 450 nm bis 800 nm liegen. Unter diesen Bedingungen kommt zum Beispiel eine LED-Lichtquelle in Betracht. Die zweite Lichtquelle sollte Licht in den Finger so einkoppeln, dass folgende Randbedingungen erfüllt sind:
1. Das Licht der zweiten Lichtquelle darf nicht direkt von der Hautoberfläche in das Spektrometer reflektiert werden, sondern muss durch das Gewebe wandern (Transmission mit diffusen Streuvorgängen).
2. Das Licht sollte spektral homogen über dem Wellenlängenbereich verteilt sein. Eine solche Beleuchtung kann mittels Halogenlampen (thermische Strahler), mittels einer kombinierten Beleuchtungseinheit aus unterschiedlichen breitbandigen LEDs realisiert sein oder kann mittels einer Lichtquelle mit LEDs anderer Wellenlängen erzeugt werden, die mit einem Fluoreszenzfarbstoff versehen sind, der in dem geforderten Spektralbereich von 800 nm bis 1.000 nm eine breitbandige Emission erzeugt. Die letztere Verfahrensweise wäre vergleichbar mit Weißlicht-LEDs, bei denen eine blaue LED einen Fluoreszenzfarbstoff anregt, der breitbandig im Spektralbereich grün-gelb-rot leuchtet, so dass die Überlagerung eine im Wesentlichen homogene spektrale Verteilung ergibt.

Die erste Lichtquelle zur Fingerabdruckbildaufnahme und zweite Lichtquelle zur spektralen Messung sollten zeitlich voneinander getrennt aktiviert werden, zum Beispiel in schnell aufeinanderfolgenden Zyklen, oder sollten in spektral nicht miteinander überlappenden Bereichen arbeiten, so dass eine spektrale Separation des Lichts der beiden Lichtquellen möglich ist.

Erfindungsgemäß wird ein Verfahren bereitgestellt, bei dem ein Finger auf eine ebene Auflagefläche eines transparenten Auflagekörpers aufgelegt wird, Licht aus einer Lichtquelle in den Auflagekörper zur Beleuchtung des auf der Auflagefläche aufliegenden Fingers eingestrahlt wird, das aus einer Seite des Auflagekörpers austretende Licht mit einem Kamerasensor zur Aufnahme des auf der Auflagefläche aufliegenden Fingers als Fingerabdruckbild aufgenommen wird, wobei die Daten des Kamerasensors zu einer Datenverarbeitungseinheit weitergeleitet werden, **dadurch gekennzeichnet, dass** Licht aus einer zweiten Lichtquelle einschließlich eines Wellenlängenbereichs von 800 bis 1.000 nm in den auf der Auflagefläche aufliegenden Finger eingestrahlt wird, ein länglicher Bereich des aus dem auf der Auflagefläche aufliegenden Finger wieder austretenden Lichts der zweiten Lichtquelle ausgeblendet wird, das durch die Blende hindurchtretende Licht in einem Spektrometer mit einem Gitter so zerlegt wird, dass die dispersive spektrale Auffächerung in einer von der Längsrichtung der Blende verschiedenen Richtung erfolgt, ein Beugungsbild des Gitters mit der Längsausdehnung der Blende in einer Richtung und der dispersiven spektralen Auffächerung des Lichtes in einer von der einen verschiedenen zweiten Richtung mit einem zweiten Kamerasensor aufgenommen wird, das Kamerasensorbild in der Datenverarbeitungseinheit als Vielzahl von Spektren entsprechend einer Vielzahl von Bildelementen entlang der Längsrichtung der Blende aufgenommen und die Vielzahl von Spektren zu einem mittleren Spektrum zusammengefasst wird, und das zusammengefasste gemittelte Spektrum in der Datenverarbeitungseinheit einer multivariaten statistischen Analyse unterzogen wird, um den Anteil von Ethanol aus dem erfassten gemittelten Spektrum zur Bestimmung des Blutalkoholgehaltes zu bestimmen.

Vorzugsweise werden die Spektren bei der Analyse jeweils in Form ihrer zweiten Ableitungen verwendet. Dieses macht das Verfahren deutlich unabhängiger von geräteabhängigen Einflüssen wie Beleuchtungsschwankungen oder aber auch breitbandigen unterschiedlichen Absorptionen, welche im Fingergewebe von unterschiedlichen Personen vorliegen können.

Vorzugsweise wird das aktuell aufgenommene Fingerabdruckbild von der Datenverarbeitungseinheit mit einer Vielzahl von gespeicherten Fingerabdruckbildern oder werden jeweils für die charakteristischen Minutienposition repräsentative Daten miteinander verglichen und bei Feststellung eines vorgegebenen Übereinstimmungsmaßes eine Personenidentifizierung entsprechend dem als übereinstimmend gefundenen gespeicherten Daten angegeben.

Vorzugsweise wird bei Auffinden eines mit dem aktuell aufgenommenen Fingerabdruckbild übereinstimmenden gespeicherten Fingerabdruckbild und bei der Feststellung, dass der ermittelte Blutalkoholgehalt unter einer vorgegebenen Grenze liegt, von der Datenverarbeitungseinheit ein Freigabesignal erzeugt.

Die Erfindung wird im Folgenden anhand eines Ausführungsbeispiels in den Zeichnungen beschrieben, in denen:
Fig. 1 eine schematische Prinzipdarstellung eines herkömmlichen Fingerabdruckaufnahmegerätes zeigt,
Fig. 2 eine schematische Prinzipdarstellung eines erfindungsgemäßen Fingerabdruckaufnahmegeräts mit 2D-Spektrometer,
Fig. 3 eine schematische Prinzipdarstellung einer anderen Ausführungsform des Fingerabdruckaufnahmegerätes im Querschnitt zeigt,
Fig. 4 die Spektren von reinem Ethanol, Fett und Wasser in Form ihrer zweiten Ableitung zeigt,
Fig. 5 die Spektren (zweite Ableitungen) von Flüssigkeitsproben mit verschiedenen Alkoholkonzentrationen zeigt,
Fig. 6 Spektren (zweite Ableitungen) von unterschiedlichen Fingern nüchterner Probanden zeigt.

Fig. 1 illustriert schematisch den prinzipiellen Aufbau eines herkömmlichen Fingerabdruckaufnahmegerätes. Das Gerät hat einen transparenten Prismen- oder Auflagekörper 2 mit einer ebenen oberen Auflagefläche, auf die ein Finger 1 auflegbar ist. Aus einer ersten Lichtquelle 3 wird Licht von unten in den Auflagekörper eingestrahlt. Aufgrund der Brechungsindexdifferenzen einerseits zwischen den Prismenkörper und darauf aufliegenden Hautbereichen und andererseits zwischen Prismenkörper und Luft (in den zwischen benachbarten Hautleisten liegenden Zwischenräumen) kann ein Fingerabdruckbild abgebildet werden. In den Bereichen aufliegender Hautleisten tritt nämlich diffuse Streuung auf, wobei diffus gestreutes Licht auf die abgeschrägte verspiegelte Seitenwand 4 des Auflagekörpers 2 fällt und von dort über ein Objektiv 10 auf einen Kamerasensor 14 abgebildet wird. Der Kamerasensor ist ein zweidimensionaler ortsempfindlicher Photosensor, vorzugsweise ein CMOS-Digitalkamerasensor. In dem aufgenommenen Fingerabdruckbild erscheinen die Hautleisten hell und die Zwischenräume zwischen den Hautleisten dunkel.

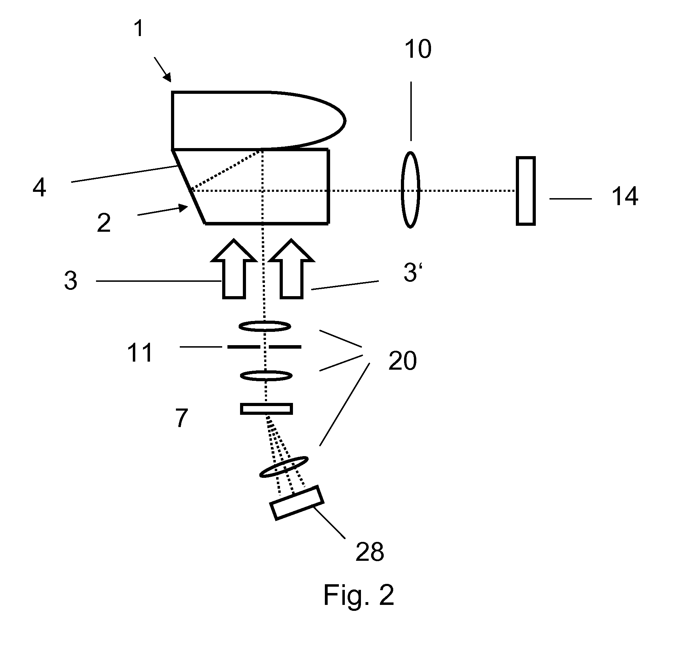

Fig. 2 zeigt schematisch den Aufbau eines erfindungsgemäßen Fingerabdruckaufnahmegeräts mit Spektrometer. Es ist eine oder mehrere weitere Lichtquellen 3' vorgesehen, die Licht einschließlich des Wellenlängenbereichs von 800 nm bis 1.000 nm erzeugen. Die zweite Lichtquelle 3' ist in dieser Darstellung zur Vereinfachung unterhalb des Auflagekörpers 2 dargestellt. Tatsächlich sollte die zweite Lichtquelle 3' eher anders angeordnet sein, zum Beispiel ihr Licht in den Finger 1 im Gebiet jenseits der Auflagefläche am oberen Rand der Seitenwand 4 direkt in den Finger einkoppeln oder sehr stark gebündelt durch den Auflagekörper 2 von unten in den Finger einkoppeln, jedenfalls so, dass kein von der Hauptoberfläche direkt reflektiertes Licht in das Spektrometer gelangt. Durch Transmission und Transflexion im Gewebe tritt dann wieder Licht aus dem Finger aus und durch die Auflagefläche in den Auflagekörper 2 ein. Dieses im Fingergewebe transmittierte Licht ist für die nachfolgend beschriebene spektroskopische Bestimmung des Blutalkoholgehaltes geeignet, denn genaue Messungen, die auf den Alkoholgehalt sensitiv sind, können nur im Gewebe gewonnen werden, während reine Reflexionsmessungen keine genaue quantitative Bestimmung des Blutalkoholgehaltes erlauben.

Durch die Auswahl des Spektralbereichs in Bereich von 800 nm bis 1.000 nm kann hier mit langen Weglängen der Transmission gearbeitet werden, da das Gewebe in diesem Spektralbereich relativ transparent ist. Durch die oben genannten Möglichkeiten der konzentrieren Einkopplung des Lichts der zweiten Lichtquelle kann dieser Messweg hinreichend genau festgelegt werden.

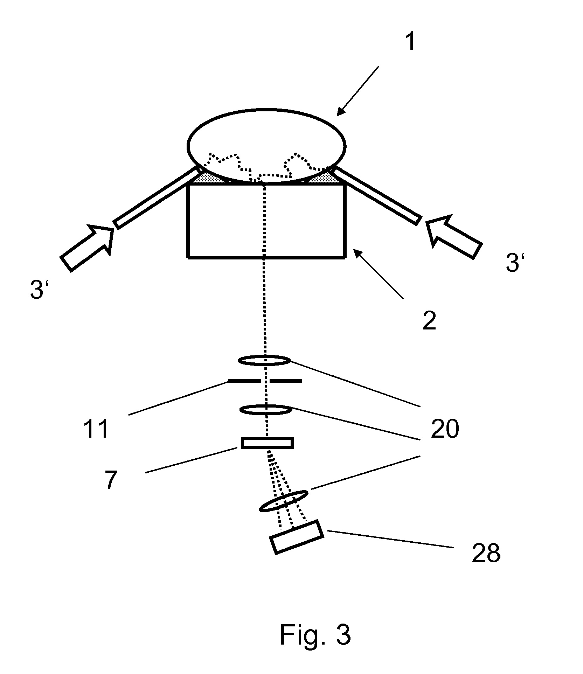

Die Festlegung des Messweges ist auch unter einem anderen Gesichtspunkt von Bedeutung. Im Finger befinden sich auch Knochen, deren Proportionen und Verlauf zwar bei jedem Menschen etwas anders sein können, aber in den Grundzügen ähnlich sind. Es ist nicht genau bekannt, wie sich der Alkoholgehalt im Knochen zeitabhängig im Verhältnis zum Blutalkoholgehalt verhält. Daher sollten Knochenbereiche aus dem Messweg ausgeschlossen werden. Daher sollte der Messweg so gewählt sein, dass der Einfluss von Knochengewebe auf das Signal möglichst gering ist. Fig. 3 zeigt ein Beispiel für eine mögliche Einkopplung von Licht aus der zweiten Lichtquelle 3', bei der der Messweg gut festgelegt und der Einfluss von Knochengewebe auf das Signal gering ist. In diesem Beispiel befinden sich zwei Lichtquellen 3' seitlich des Auflagekörpers 2 und Strahlen von beiden Seiten aus Licht in den Finger 1 im Bereich oberhalb des Auflagekörpers 2 ein. Der schematisch angedeutete gepunktete Messweg führt dann über diffuse Streuvorgänge dazu, dass Licht aus dem Finger nach unten in den Auflagekörper 2 austritt. Bei einer solchen Ausgestaltung der zweiten Lichtquelle 3' ist der Messweg gut festgelegt und der Einfluss von Knochengewebe gering, da das an der Unterseite des Fingers wieder austretende Licht der zweiten Lichtquellen 3' ganz überwiegend durch Streuvorgänge im Fingergewebebereich unterhalb des Knochens erzeugt wird.

Im Folgenden wird der prinzipielle Aufbau des zweidimensionalen Spektrometers zur Untersuchung des den Finger durchdringenden Lichts der zweiten Lichtquelle beschrieben. Das aus dem auf der Auflagefläche des Auflagekörpers 2 aufliegenden Finger austretende Licht der zweiten Lichtquelle 3' durchläuft den Auflagekörper, unterhalb dessen eine spalt- oder schlitzförmige Blende 11 des Spektrometers angeordnet ist. Bei dem in Fig. 2 dargestellten Aufbau würde die Blende 11 mit ihrer Längsausdehnung senkrecht zur Figurenebene unterhalb des Auflagekörpers liegen. Der von der Blende 11 ausgeblendete Streifen des aus dem Finger austretenden und über ein erstes Objektiv 20 abgebildeten Lichts wird über ein zweites Objektiv 20 auf ein Gitter 24 geworfen. Dieses Gitter 24 ist so aufgebaut und angeordnet, dass die dispersive wellenlängenabhängige Auffächerung des gebeugten Lichts in einer von der Längsausdehnung der Blende verschiedenen, vorzugsweise dazu senkrechten, Richtung erfolgt. In der Darstellung von Fig. 2 bedeutet dies, dass die Längsausdehnung der Blende senkrecht zur Figurenebene steht, während die dispersive Auffächerung des Lichts in der Figurenebene erfolgt. Über ein weiteres Objektiv 20 wird das Beugungsbild der Blende dann auf den zweiten Kamerasensor 28 geworfen. Auf der Sensoroberfläche verläuft dann das Beugungsbild der Blende mit der Längsausdehnung der Blende in einer ersten Richtung (in dem dargestellten Beispiel senkrecht zur Figurenebene) und mit der dispersiven Auffächerung des Beugungsbildes in einer zweiten, hier zur ersten senkrechten Richtung (in der Figurenebene).

Fig. 3 zeigt eine Ausführungsform mit einem etwas anderen Aufbau des Spektrometers relativ zum Auflagekörper. Die Blende 11 liegt hier mit ihrer Längsausdehnung parallel zur Längsausdehnung des Auflagekörpers 2 und des darauf aufgelegten Fingers 1. Das Licht der zweiten Lichtquelle 3' wird seitlich in den Finger 1 oberhalb des Auflagekörpers 2 eingekoppelt. Durch diffuse Streuung tritt transmittiertes Licht wieder an der Unterseite des auf der Auflagefläche des Auflagekörpers 2 aufliegenden Fingers aus und in den Auflagekörper 2 ein. Ein erstes Objektiv 20 bildet das Bild dieses durch den Finger transportieren Licht auf die spaltförmige Blende 11 ab. Die spaltförmige Blende extrahiert aus diesem Bild einen schmalen Streifen, zum Beispiel einer Breite von etwa 30 Mikrometer. Das zweite Objektiv 20 hinter der Blende 11 bildet die spaltförmige Blende 11 ins Unendliche ab. Hinter dem zweiten Objektiv 20 liegt das Gitter 7, das eine dispersive Aufspaltung des Lichts in Richtung senkrecht zur Längsausdehnung der spaltförmigen Blende bewirkt. Bei der hier dargestellten Ausführungsform erfolgt die spektrale Aufspaltung des Lichts in der Bildebene von Fig. 3, während die Längsausdehnung der Blende 11 senkrecht auf der Bildebene steht. Das dritte Objektiv 20 kehrt die Abbildung vom Unendlichen wieder auf das reale Bild um, das aber nun durch das dazwischenliegende Gitter 7 spektral aufgefächert ist. Auf dem zweiten Kamerasensor 28 wird so ein Beugungsbild abgebildet, in dem die Längsausdehnung der spaltförmigen Blende 11 senkrecht auf der Figurenebene verläuft, während die spektrale Auffächerung in der Richtung der Bildebene erfolgt. Bezeichnet man die Achse senkrecht zur Figurenebene als X-Richtung, so läge die Längsausdehnung des Beugungsbildes der spaltförmigen Blende 11 auf dem Kamerasensor 28 in X-Richtung und die spektrale Aufspaltung in einer Y-Richtung senkrecht dazu in der Bildebene von Fig. 3.

Bei dem Kamerasensor 28 handelt es sich vorzugsweise um einen zweidimensionalen CMOS-Digitalkamerasensor. Dieser ermöglicht es, mit einer einzigen Bildaufnahme gleichzeitig bis zu 1.000 Spektren (ein Spektrum pro Zeile) mit einer Datentiefe bis zu 12 Bit aufzunehmen. Jedes der Spektren entspricht damit dem Spektrum eines Bildelements der Blende, d.h. man kann sich die schlitzförmige Blende in 1.000 Bildelemente unterteilt denken, wobei das Licht jedes dieser Bildelemente durch das Gitter dann auf eine Zeile des Kamerasensors abgebildet wird. Der Kamerasensor kann die Bildaufnahme etwa 50 Mal pro Sekunde wiederholen. Durch den zur Analyse benötigten kleinen Spektralbereich kann die bei diesen Sensoren mögliche Teilbildaufnahme eingesetzt werden. Bei CMOS-Sensoren können Teilbilder (Regions Of Interest - ROI) eingestellt werden, die es ermöglichen, nur den eingestellten interessierenden Bildbereich des Sensors bei gleichzeitiger Beibehaltung der Grunddatenrate auszulesen. Dieses Verfahren erlaubt es, über 20.000 Spektren in weniger als einer Sekunde aufzunehmen, was eine Datentiefe von effektiv größer als 20 Bit erzeugt. Unter effektiver Datentiefe wird hier die Datentiefe mal Anzahl der Spektren verstanden (12bit entspricht 4096; 4096 x 20000= 81920000, also ca. 26 Bit effektive Datentiefe). Mit einer so großen Zahl von unabhängig voneinander gemessenen Spektren können Fluktuationen und statistische Fehler durch Zusammenfassung aller Spektren praktisch vollständig eliminiert werden, so dass in dem so zusammengefassten gemittelten Spektrum auch kleinste Veränderungen in dem Spektrum nachgewiesen werden können.

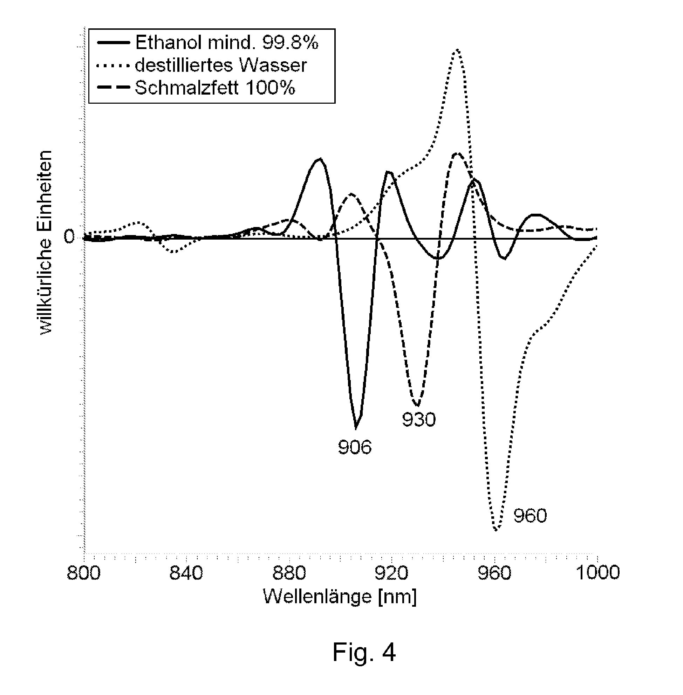

Fig. 4 zeigt die Einzelspektren von reinem Ethanol, destilliertem Wasser und Fett im Wellenlängenbereich von 800 bis 1.000 nm, wobei die zweiten Ableitungen der Spektren dargestellt sind.

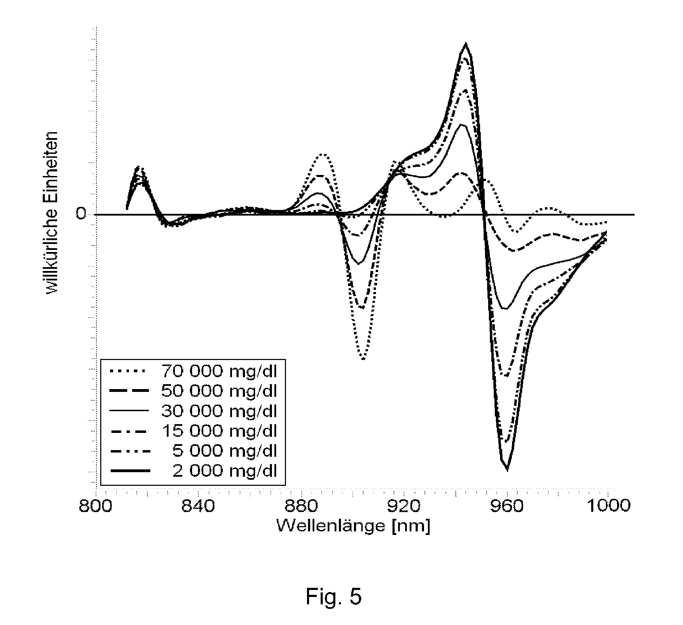

Fig. 5 zeigt die mit einem erfindungsgemäßen Gerät aufgenommenen Spektren von Probenlösungen in einer Küvette, wobei sechs verschiedene Ethanolkonzentrationen von 2.000 mg/dl bis 70.000 mg/dl dargestellt sind. Das sehr charakteristische Verhalten von Ethanol im Wellenlängenbereich bei 906 nm, das sich in der Fig. 2 dargestellten zweiten Ableitung als schmales Minimum zeigt, findet sich auch in Fig. 5 wieder, wo sich dieses charakteristische Minimum mit wachsendem Ethanolgehalt zunehmend ausprägt.

Aus einem mit dem erfindungsgemäßen Fingerabdruckaufnahmegerät erfassten gemittelten Spektrum lässt sich daher mit hoher Empfindlichkeit der Blutalkoholgehalt bestimmen. Dazu wird ein multivariates statistisches Analyseverfahren verwendet, um die Beiträge der Einzelsubstanzen zu dem erfassten gemittelten Spektrum zu ermitteln und daraus insbesondere den relativen Beitrag des Ethanols zu bestimmen. Anschaulich wird in einem solchen Analyseverfahren das ermittelte zusammengefasste Spektrum als Linearkombination der Einzelspektren der reinen Substanzen aus Fig. 4 dargestellt und die Koeffizienten der Linearkombination der Einzelspektren ermittelt, die die beste Übereinstimmung mit dem erfassten gemittelten Spektrum liefern.

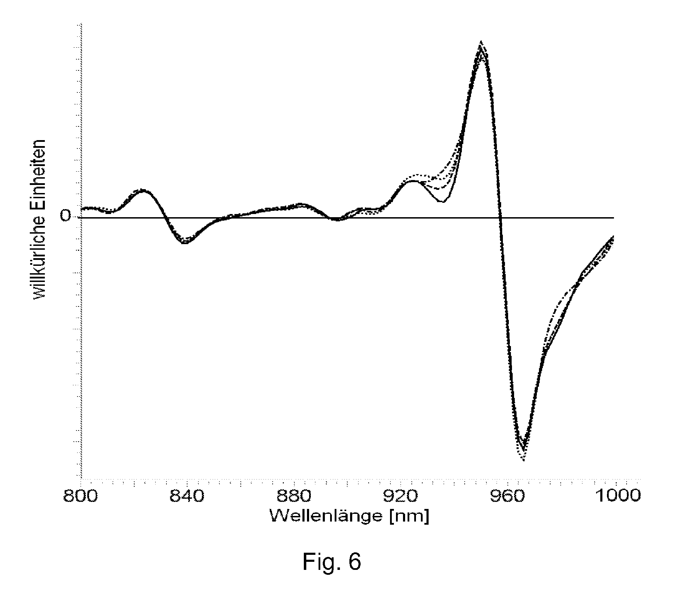

Figur 6 zeigt die Spektren mehrerer nüchterner Personen, woraus sich ergibt, dass die von Person zu Person auftretenden Schwankungen vergleichsweise gering sind und gut von durch Blutalkohol bedingten charakteristischen Veränderungen unterscheidbar sind.

Die vorliegende Erfindung ermöglicht somit die simultane Aufnahme eines Fingerabdruckbildes und die Erfassung des Blutalkoholgehaltes derselben Person. Dabei bedeutet simultan nicht im strengen Sinne gleichzeitig, da die Aufnahme des Fingerabdruckbildes und Transmissionsmessung mit dem Licht der zweiten Lichtquelle und deren spektrale Analyse auch zeitlich aufeinanderfolgend ausgeführt werden können, um eine gegenseitige Beeinflussung zu vermeiden. Allerdings kann die Bildaufnahme und die spektrale Messung so schnell aufeinanderfolgend durchgeführt werden, dass ein Manipulationsversuch (schneller Wechsel der Finger von zwei Personen) ausgeschlossen ist. Die Fingerabdruckbildaufnahme und die Transmissionsmessung können in Sekundenbruchteilen aufeinanderfolgen und wiederholt ausgeführt werden, so dass sichergestellt werden kann, dass beide von derselben Person stammen und in diesem Sinne gleichzeitige Erfassungen von Fingerabdruckbild und Blutalkoholgehalt eben dieser Person darstellen.

Es sollten Einzelspektren aller Substanzen vorab gemessen und gespeichert werden, die in dem untersuchten Wellenlängenbereich relevant sind. Soweit die zweiten Ableitungen der Spektren betrachtet werden, müssen natürlich nur solche Substanzen berücksichtigt werden, deren zweite Ableitungen in dem fraglichen Wellenlängenbereich von Null verschieden sind. Zum Beispiel brauchen Melanin und Hämoglobin in dem hier vorzugsweise betrachteten Spektralbereich von 800 bis 1.000 nm nicht berücksichtigt werden, da sie keine signifikanten Steigungsänderungen in den Spektren aufweisen.

Bei der Aufnahme der Einzelspektren ist insbesondere beim Wasserspektrum auf dessen Temperaturabhängigkeit zu achten, d.h. die Einzelspektren sollten bei einer der Körpertemperatur entsprechenden Temperatur aufgenommen werden.

## Patentansprüche

1. Fingerabdruckaufnahmegerät zur automatischen Aufnahme eines Fingerabdruckbildes mit einer Datenverarbeitungseinheit, einem transparenten Auflagekörper (2) mit einer ebenen Auflagefläche zur Auflage eines Fingers, einer Lichtquelle (3) zur Einstrahlung von Licht in den Auflagekörper und zur Beleuchtung des auf der Auflagefläche aufliegenden Fingers, einem mit der Datenverarbeitungseinheit verbundenen ersten Kamerasensor (14) zur Aufnahme des auf der Auflagefläche aufliegenden Fingers als Fingerabdruckbild, **dadurch gekennzeichnet, dass** eine zweite Lichtquelle (3') zur Einstrahlung von Licht einschließlich des Wellenlängenbereichs von 800 bis 1000 nm in den Finger und ein Spektrometer vorgesehen sind, das eine schlitzförmige Blende zur Ausblendung eines schlitzförmigen Bereichs des aus dem auf der Auflagefläche aufliegenden Finger wieder austretenden Lichts der zweiten Lichtquelle (3'), ein Gitter (24), das so aufgebaut und angeordnet ist, dass die dispersive Auffächerung des durch die Blende hindurchtretenden Lichts in einer von der Längsrichtung der Blende verschiedenen Richtung erfolgt, und einen zweiten Kamerasensor (28) aufweist, der so aufgebaut und angeordnet ist, dass er ein Beugungsbild des Gitters mit der Längsrichtung der Blende in einer ersten Richtung und der dispersiven spektralen Auffächerung des Lichtes in einer von der ersten verschiedenen zweiten Richtung auf seiner Kamerasensorfläche aufnimmt, wobei der zweite Kamerasensor mit der Datenverarbeitungseinheit verbunden ist, die weiter dazu vorbereitet ist, die von dem zweiten Kamerasensor (28) empfangenen Signale als eine Vielzahl von Spektren entsprechend einer Vielzahl von Bildelementen entlang der Längsrichtung der Blende aufzunehmen und die Vielzahl von Spektren zu einem mittleren Spektrum zusammenzufassen, wobei die Datenverarbeitungseinheit weiter dazu vorbereitet ist, das zusammengefasste gemittelte Spektrum einer multivariaten statistischen Analyse zu unterziehen, um den Anteil von Ethanol aus dem erfassten gemittelten Spektrum zu bestimmen.

2. Fingerabdruckaufnahmegerät nach Anspruch 1, **dadurch gekennzeichnet, dass** das Gitter (24) des Spektrometers ein Blaze-Gitter ist, das dazu optimiert ist, das dispergierte Licht für einen gegebenen Wellenlängenbereich in einen vorgegebenen Winkelbereich konzentriert abzugeben.

3. Fingerabdruckaufnahmegerät nach Anspruch 2, **dadurch gekennzeichnet, dass** das Blaze-Gitter ein Reflexions- oder Transmisionsgitter mit asymmetrisch sägezahnförmig gestalteter Oberfläche oder ein holographisches Gitter ist.

4. Fingerabdruckaufnahmegerät nach Anspruch 3, **dadurch gekennzeichnet, dass** das Blaze-Gitter ein VPH-Gitter (Volume Phase Holographic Grating) ist.

5. Fingerabdruckaufnahmegerät nach einem der vorhergehenden Ansprüche, **dadurch gekennzeichnet, dass** die Datenverarbeitungseinheit Spektren von reinem Ethanol, Wasser und Körperfett gespeichert enthält, wobei die Datenverarbeitungseinheit weiter dazu vorbereitet ist, nach einem Verfahren der multivariaten Statistik das zusammengefasste Spektrum aus den Anteilen der gespeicherten Einzelspektren zusammenzusetzen und daraus den relativen Anteil von Ethanol zu bestimmen.

6. Fingerabdruckaufnahmegerät nach einem der vorhergehenden Ansprüche, bei dem die Datenverarbeitungseinheit Zugriff auf eine Mehrzahl von gespeicherten Fingerabdruckbildern oder eine Mehrzahl von Datensätzen mit für die charakteristischen Minutienpositionen repräsentativen Daten hat und Abgleichprogramme enthält, um ein aktuell aufgenommenes Fingerabdruckbild mit den gespeicherten Fingerabdruckbildern oder für die charakteristischen Minutienpositionen repräsentativen Daten mit entsprechenden gespeicherten zu vergleichen und bei einem vorgegebenen Übereinstimmungsmaß eine Identifizierung der Person anzugeben.

7. Verfahren zur automatischen Aufnahme eines Fingerabdruckbildes, bei dem
ein Finger auf eine ebene Auflagefläche eines transparenten Auflagekörpers (2) aufgelegt wird, Licht aus einer Lichtquelle (3) in den Auflagekörper zur Beleuchtung des auf der Auflagefläche aufliegenden Fingers eingestrahlt wird,
das aus einer Seite des Auflagekörpers austretende Licht mit einem Kamerasensor (14) zur Aufnahme des auf der Auflagefläche aufliegenden Fingers als Fingerabdruckbild aufgenommen wird, wobei die Daten des Kamerasensors zu einer Datenverarbeitungseinheit weitergeleitet werden,
**dadurch gekennzeichnet, dass**
Licht aus einer zweiten Lichtquelle (3') einschließlich eines Wellenlängenbereichs von 800 bis 1.000 nm in den auf der Auflagefläche aufliegenden Finger eingestrahlt wird,
ein länglicher Bereich des aus dem auf der Auflagefläche aufliegenden Finger wieder austretenden Lichts der zweiten Lichtquelle mit einer spaltförmigen Blende (11) ausgeblendet wird,
das durch die Blende (11) hindurchtretende Licht in einem Spektrometer mit einem Gitter (24) so zerlegt wird, dass die dispersive spektrale Auffächerung in einer von der Längsrichtung der Blende verschiedenen Richtung erfolgt,
ein Beugungsbild des Gitters mit der Längsausdehnung der Blende in einer Richtung und der dispersiven spektralen Auffächerung des Lichtes in einer von der einen verschiedenen zweiten Richtung mit einem zweiten Kamerasensor (28) aufgenommen wird,
das Bild des zweiten Kamerasensors (28) in der Datenverarbeitungseinheit als Vielzahl von Spektren entsprechend einer Vielzahl von Bildelementen entlang der Längsrichtung der Blende aufgenommen und die Vielzahl von Spektren zu einem mittleren Spektrum zusammengefasst werden, und
das zusammengefasste gemittelte Spektrum in der Datenverarbeitungseinheit einer multivariaten statistischen Analyse unterzogen wird, um den Anteil von Ethanol aus dem erfassten gemittelten Spektrum zur Bestimmung des Blutalkoholgehaltes zu bestimmen.

8. Verfahren nach Anspruch 7, **dadurch gekennzeichnet, dass** das Licht in dem Spektrometer mittels eines Blaze-Gitters gebeugt wird, das dazu optimiert ist, das dispergierte Licht für einen gegebenen Wellenlängenbereich in einen vorgegebenen Winkelbereich konzentriert abzugeben, in dem der zweite Kamerasensor angeordnet ist.

9. Verfahren nach einem der Ansprüche 7 oder 8, wobei bei der multivariaten statistischen Analyse der Spektren vorab gespeicherte Spektren von reinem Ethanol, Wasser und Körperfett verwendet werden, um das zusammengefasste gemittelte Spektrum aus den Anteilen der gespeicherten Einzelspektren zusammenzusetzen und daraus den relativen Anteil von Ethanol als Blutalkoholgehalt zu bestimmen.

10. Verfahren nach einem der Ansprüche 7 bis 9, **dadurch gekennzeichnet, dass** die in der multivariaten statistischen Analyse verwendeten Spektren jeweils in Form ihrer zweiten Ableitung verwendet werden.

11. Verfahren nach einem der Ansprüche 7 bis 10, **dadurch gekennzeichnet, dass** das aktuell aufgenommene Fingerabdruckbild von der Datenverarbeitungseinheit mit einer Vielzahl von gespeicherten Fingerabdruckbildern oder für die charakteristischen Minutienpositionen repräsentative Daten des aktuell aufgenommenen Fingerabdruckbildes mit entsprechenden gespeicherten Daten verglichen werden und bei Feststellung eines vorgegebenen Übereinstimmungsmaßes eine Personenidentifizierung entsprechend dem als übereinstimmend gefundenen gespeicherten Fingerabdruckbild angegeben wird.

12. Verfahren nach einem der Ansprüche 7 bis 11, **dadurch gekennzeichnet, dass** bei Auffinden eines mit dem aktuell aufgenommenen Fingerabdruckbild übereinstimmenden gespeicherten Fingerabdruckbild und bei der Feststellung, dass der ermittelte Blutalkoholgehalt unter einer vorgegebenen Grenze liegt, ein Freigabesignal erzeugt wird.
